# EUROPÄISCHE PATENTSCHRIFT

(11) **EP 0 936 562 B1**
(45) Veröffentlichungstag und Bekanntmachung des Hinweises auf die Patenterteilung: **22.10.2003**
(21) Anmeldenummer: 99101290.7
(22) Anmeldetag: 25.01.1999
(51) Int. Cl.: G06F 15/02

(54) **Verfahren und EDV-System zur Kommunikation mit mindestens einem zweiten EDV-System**
Method and data processing system for communicating with at least one other data processing system
Méthode et système de traitement de données pour la communication avec au moins un autre système de traitement de données

(30) Priorität: 16.02.1998 DE 19806237
(43) Veröffentlichungstag der Anmeldung: 18.08.1999
(73) Patentinhaber: Sennheiser electronic GmbH & Co. KG, 30900 Wedemark (DE)
(72) Erfinder: Meyer, Rolf, 30974 Wennigsen (DE); Haupt, Axel, 30855 Langenhagen (DE)
(74) Vertreter: Eisenführ, Speiser & Partner

(56) Entgegenhaltungen:
- WO-A-91/04461
- WO-A-97/20274
- J. GOSLING, H. MCGILTON: "The Java language environment, a white paper" SUN MICROSYSTEM COMPANY,Oktober 1985, Seiten 10-85, XP002042922

## Beschreibung

Die Erfindung betrifft ein Verfahren zur Kommunikation zwischen einem ersten EDV-System und einem zweiten EDV-System und ein EDV-System zur Kommunikation mit mindestens einem zweiten EDV-System, mit einer Recheneinheit zur Verarbeitung von Daten, mit einer Speichereinheit zur Speicherung von Daten, mit einer Anzeigeeinheit zur Anzeige von Daten, mit einer Eingabeeinheit zur Eingabe von Daten, mit einer Übermittlungseinheit zum Austauschen von Daten mit dem zweiten EDV-System und mit einer Schnittstelle zum Anschließen der Recheneinheit an die Übermittlungseinheit.

Derartige Verfahren zur Kommunikation und derartige EDV-Systeme (EDV: Elektronische Datenverarbeitung) sind aus dem Stand der Technik bekannt. Dabei handelt es sich beispielsweise um Personal-Computer, die über eine normale Telefonleitung mit Hilfe eines Kommunikationsprogramms miteinander kommunizieren. Dabei befindet sich das Kommunikationsprogramm jeweils auf beiden miteinander kommunizierenden Rechnern. So ist es beispielsweise üblich, Nachrichten zwischen Rechnern über Telefonleitungen auszutauschen, wobei auf jedem Rechner ein Programm zur Verarbeitung, z.B. ein sogenanntes E-Mail-Programm, installiert ist. Darüber hinaus ist es auch erforderlich, daß es sich bei diesen E-Mail-Programmen um Programme handelt, die miteinander kompatibel sind.

Zur weiteren Verarbeitung der übermittelten Nachrichten in den jeweiligen Rechnern ist es dann weiterhin erforderlich, daß der jeweilige Rechner entsprechende Programme zur Verarbeitung der übermittelten Nachrichten enthält. Dies können beispielsweise Grafikverarbeitungs- oder Textverarbeitungsprogramme sein.

Es ist daher im Stand der Technik nachteiligerweise erforderlich, daß jeder Rechner die entsprechenden Verarbeitungsprogramme zur Verarbeitung der übermittelten Nachrichten oder Informationen bereits vorrätig hält. Dies erfordert im Stand der Technik, daß diese Rechner relativ große Speichereinheiten zur Speicherung der notwendigen und häufig genutzten Verarbeitungsprogramme aufweisen. Weiterhin nachteilig ist es, daß feststehende Personal-Computer ihre Funktion nur an ihrem Standort erfüllen können. Es sind zwar zwischenzeitlich sehr leistungsfähige, mobile Personal-Computer entwickelt worden, z.B. Laptops oder Notebooks; diese transportablen Personal-Computer sind jedoch immer noch relativ schwer und unhandlich und aufgrund der weiterhin erforderlichen großen Speicherkapazität sehr teuer.

Besonders nachteilig, insbesondere auch bei den transportablen Laptops und Notebooks ist es, daß diese immer noch zu schwer und zu groß sind, um beispielsweise während einer Messe, einer Ausstellung oder dem Besuch einer Touristenattraktion von einem Benutzer ständig in der Hand oder in der Jacke transportiert werden zu können. Gerade in diesen Bereichen, d.h. beispielsweise bei dem Besuch einer Messe, wäre es jedoch insbesondere für den Fachbesucher extrem vorteilhaft, wenn er jederzeit auf Daten zurückgreifen könnte, die beispielsweise ein großes, feststehendes EDV-System vorrätig hält.

Das Dokument J. Gosling, H. McGilton: "The Java Language Environment, A White Paper", Sun Micro systems Computer Company, Oktober 1995, Seiten 10-85, beschreibt einen Browser, der bei Auftreten eines unbekannten Datentyps oder Protokolls automatisch ein dazugehöriges Handlerprogramm lädt.

Aufgabe der Erfindung ist es, ein Verfahren und ein EDV-System zur Kommunikation mit mindestens einem zweiten EDV-System zur Verfügung zu stellen, welches die oben genannten Nachteile vermeidet, und welches es einem Benutzer ermöglicht auch bei nur geringen Abmessungen und geringer Speicherkapazität des EDV-Systems alle üblichen Daten und Datenverarbeitungsprogramme nutzen zu können.

Diese Aufgabe wird erfindungsgemäß bei einem Verfahren der eingangs genannten Art dadurch gelöst, daß bei einer Abfrage von Daten des zweiten EDV-Systems durch das erste EDV-System dem ersten EDV-System mindestens ein Verarbeitungsprogramm zur Verarbeitung der übermittelten Daten mit übermittelt wird. Bei einem EDV-System zur Kommunikation mit mindestens einem zweiten EDV-System gemäß der eingangs genannten Art wird diese Aufgabe durch ein EDV-System gemäß Anspruch 10 gelöst.

Die Vorteile der Erfindung liegen insbesondere darin, daß mit Hilfe des erfindungsgemäßen Verfahrens bzw. mit Hilfe des erfindungsgemäßen EDV-Systems das entsprechende Verarbeitungsprogramm zur Nutzung der übermittelten Daten bzw. Informationen nicht mehr in dem bevorzugt transportablen ersten EDV-System vorrätig gehalten werden muß. Durch jeweils direkt vor oder direkt nach der Übermittlung der eigentlichen Daten bzw. Informationen erfolgenden Übermittlung des Verarbeitungs- oder Bedienprogramms zur Nutzung dieser übermittelten Informationen benötigt das erste EDV-System nur ausreichend Speicherplatz für ein Bedien- oder Verarbeitungsprogramm. Die Speicherkapazität und damit das Gewicht und die Abmessungen des ersten EDV-Systems können auf diese Art und Weise erheblich reduziert werden. Somit ist es möglich, das erste EDV-System derartig leicht und klein auszuführen, daß es auch beispielsweise für den eingangs genannten Messebesucher jederzeit nutzbar ist, d.h. beispielsweise in der Hand oder in der Jackentasche transportiert werden kann.

Besonders bevorzugt ist es, daß das Verarbeitungsprogramm zur Nutzung der übermittelten Daten ebenfalls von dem zweiten EDV-System an das erste EDV-System übermittelt wird. Es ist jedoch auch denkbar, daß das Verarbeitungsprogramm von einem dritten EDV-System übermittelt wird, welches beispielsweise nur für diese Aufgabe zuständig ist.

Es ist besonders bevorzugt, daß bei der Abfrage der Informationen aus dem zweiten EDV-System durch das erste EDV-System dem zweiten EDV-System von dem ersten EDV-System erste Daten übermittelt werden, durch die das zweite EDV-System zur Übermittlung des Verarbeitungsprogramms veranlaßt wird. Bei diesen ersten Daten kann es sich beispielsweise um ein für das zweite EDV-System verständliches Befehlsprogramm handeln, welches dem zweiten EDV-System den Befehl erteilt, kurz vor oder kurz nach der Übermittlung der gewünschten Daten oder Informationen auch das entsprechende Verarbeitungsprogramm zur Verarbeitung und/oder Nutzung der übermittelten Daten oder Informationen zu übermitteln. Es ist jedoch auch denkbar, daß das zweite EDV-System automatisch bei einer Anfrage durch das erste EDV-System das entsprechende Verarbeitungsprogramm zusammen mit den gewünschten Daten oder Informationen mit an das erste EDV-System übermittelt. Eine weitere bevorzugte Ausführungsform des erfindungsgemäßen Verfahrens zeichnet sich dadurch aus, daß die ersten Daten ein interaktives Programm, beispielsweise ein Internet-Suchprogramm darstellen, welches zum Suchen von Daten in dem zweiten EDV-System geeignet ist. Dabei ist es besonders vorteilhaft, wenn dieses Suchprogramm, welches beispielsweise ein Web-Browser sein kann, ebenfalls das Verarbeitungsprogramm suchen und auffinden kann.

Eine weitere vorteilhafte Ausführungsform des erfindungsgemäßen Verfahrens zeichnet sich dadurch aus, daß das übermittelte Verarbeitungsprogramm zur Nutzung der übermittelten Informationen nur so lange von dem ersten EDV-System gespeichet wird, wie dies zur Verarbeitung der übermittelten Informationen nötig ist. Auf diese Art und Weise wird der vorhandene Speicherplatz in dem ersten EDV-System nur so lange wie notwendig beansprucht und ist nach Beendigung der Nutzung der übermittelten Daten wieder frei für eine erneute Aufnahme von neuen Daten oder Verarbeitungsprogrammen. Dabei ist es besonders vorteilhaft, daß der Benutzer vor der Übermittlung oder während der Nutzung der übermittelten Daten bestimmt, wie lange das Verarbeitungsprogramm gespeichert werden soll.

Eine besonders vorteilhafte Ausführungsform des erfindungsgemäßen EDV-Systems gemäß Anspruch 10 zeichnet sich dadurch aus, daß die Übermittlungseinheit von dem EDV-System abnehmbar ist. Bei dieser abnehmbaren Übermittlungseinheit kann es sich beispielsweise um ein Mobiltelefon oder dergleichen handeln. Dieses Mobiltelefon kann aktiv oder passiv ausgeführt sein. Im letzteren Fall zeichnet sich dieses passive Mobiltelefon besonders vorteilhaft dadurch aus, daß es als steckbares Modul an das EDV-System anschließbar ist. Bei diesem passiven Mobiltelefon wird das Mobiltelefon vorteilhafterweise durch das EDV-System, d.h. durch die Eingabeeinrichtungen des EDV-Systems, kontrolliert. Das als Steckmodul ausgeführte Mobiltelefon, welches die Übermittlungseinheit darstellt, kann daher besonders klein und leicht ausgeführt werden, da es nur die zur Übermittlung von Daten notwendigen Bausteine enthalten muß, während auf die Eingabe- und Anzeigebausteine, die ein Mobiltelefon normalerweise enthält, verzichtet werden kann.

Eine weitere bevorzugte Ausführungsform des EDV-Systems gemäß der Erfindung zeichnet sich dadurch aus, daß das EDV-System ein transportabler Personal-Computer, wie beispielsweise ein Palmtop oder Notepad ist. Dabei ist es besonders bevorzugt, wenn die Eingabeeinheit als berührungsempfindlicher Bildschirm ausgeführt ist, so daß Eingabe- und Anzeigeeinheit in dem Bildschirm zusammengefaßt sind. Zusammen mit dem sehr klein ausführbaren, passiven Steckmodul-Mobiltelefon kann daher das erste EDV-System ein sehr kleines Notepad sein, welches leicht in der Jackentasche oder der Hand transportiert werden kann und gleichzeitig uneingeschränkt in der Lage ist, alle übermittelten Informationen vollständig und bedienerfreundlich zu verarbeiten.

Bei den übermittelten Informationen kann es sich beispielsweise um einen Stadtplan handeln. Dieser Stadtplan läßt sich dann mit dem ebenfalls übermittelten Verarbeitungs- und Bedienprogramm durch den Nutzer des transportablen ersten EDV-Systems interaktiv nutzen. Dabei kann durch das erfindungsgemäße Verfahren bzw. durch das erfindungsgemäße EDV-System vorteilhafterweise auf das eigens für diesen Stadtplan entwickelte Verarbeitungs- und Nutzungsprogramm zurückgegriffen werden, da dieses ebenfalls gemäß der Erfindung an das erste EDV-System übermittelt wird.

Die Kommunikation bzw. die Übermittlung der Daten und Programme von dem zweiten EDV-System an das erste EDV-System bzw. die Übermittlung der Daten und Programme von dem EDV-System an das zweite EDV-System geschieht vorteilhafterweise mit Hilfe der im Stand der Technik üblichen DECT-, GSM- oder Ethernet-Systeme.

Weitere vorteilhafte Ausführungsformen der Erfindungen sind in den Unteransprüchen angegeben.

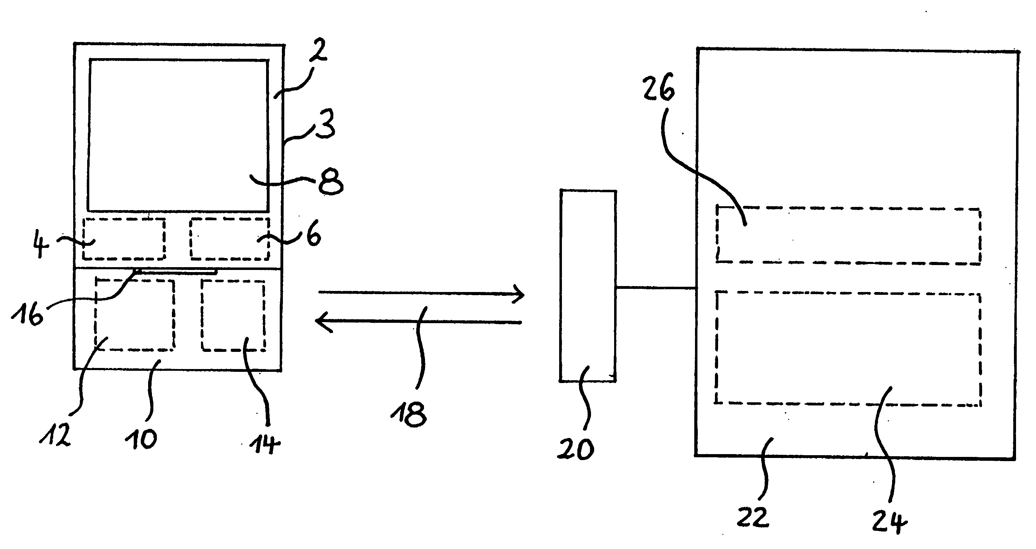

Eine Ausführungsform der Erfindung wird nun mit Bezug auf die beiliegende Zeichnung beschrieben.

Die Figur zeigt als erstes EDV-System ein Palmtop 2. Das Palmtop 2 weist ein Gehäuse 3 auf. In dem Gehäuse 3 befinden sich gestrichelt dargestellt eine Recheneinheit 4 und eine Speichereinheit 6. Das Palmtop 2 läßt sich durch einen berührungsempfindlichen Bildschirm 8, welcher gleichzeitig als Anzeige- und Eingabeeinheit zur Anzeige und Eingabe von Daten dient, bedienen. Das Palmtop 2 weist eine Schnittstelle 16 auf zum Anschließen einer Übermittlungseinheit an das Palmtop 2. In der Zeichnung ist ein Steckmodul 10 auf die Schnittstelle 16 aufgestreckt. Das Steckmodul 10 kann beispielsweise durch (nicht dargestellt) Fixierstifte, die in (nicht dargestellt) Löcher in dem Palmtop 2 eingreifen, weiterhin an dem Palmtop gesichert sein.

Das als Übermittlungseinheit ausgebildete Steckmodul 10 weist eine Sendeeinheit 12 und eine Empfangseinheit 14 zum Empfangen und Senden von Daten auf. Bei dem Steckmodul 10 handelt es sich um ein passives Mobiltelefon, welches über den berührungsempfindlichen Bildschirm 8 aktivier- und bedienbar ist. Das Steckmodul 10 kommuniziert in der dargestellten Ausführungsform mit Hilfe des GSM-Systems 18 mit einer Sende- und Empfangseinheit 20 eines zweiten EDV-Systems 22. Das zweite EDV-System 22 weist ebenfalls eine Recheneinheit 24 und Speichereinheit 26 auf.

Gemäß dem erfindungsgemäßen Verfahren wird bei einer Aktivierung des als Übermittlungseinheit ausgebildeten Steckmoduls 10 mit Hilfe des berührungsempfindlichen Bildschirms 8 durch einen Benutzer eine Anfrage über die GSM-Verbindung 18 an das zweite EDV-System 22 zur Übermittlung von in der Speichereinheit 26 des zweiten EDV-Systems 22 gespeicherten Daten aufgefordert. Gleichzeitig mit der Übermittlung der Aufforderung an das zweite EDV-System übermittelt das als erstes EDV-System ausgebildete Palmtop 2 mit Hilfe der Übermittlungseinheit 10 und dem GSM-System 18 dem zweiten EDV-System 22 den Befehl, auch das entsprechende Verarbeitungsprogramm aus der Speichereinheit 26 abzurufen und dem Palmtop 2 zu übermitteln. Daher übermittelt das EDV-System 22 aus der Speichereinheit 26 zusätzlich zu den gewünschten Daten auch das für diese Daten geeignete Verarbeitungs- bzw. Bedienprogramm mit Hilfe der Sende- und Empfangseinheit 20 und des GSM-Systems 18 an das Palmtop 2. Somit liegen bei Abschluß der Kommunikation in der Speichereinheit 6 des Palmtops 2 die gewünschten Daten und Informationen und auch das entsprechende Verarbeitungs- bzw. Bedienprogramm zur Verarbeitung und Nutzung der übermittelten Daten vor.

## Patentansprüche

1. Verfahren zur Kommunikation zwischen einem ersten EDV-System (2) und mindestens einem zweiten EDV-System (22),
**dadurch gekennzeichnet, daß** bei einer Abfrage von Daten des zweiten EDV-Systems (22) durch das erste EDV-System (2) dem ersten EDV-System (2) mindestens ein Verarbeitungsprogramm zur Verarbeitung der übermittelten Daten mit übermittelt wird.

2. Verfahren nach Anspruch 1,
**dadurch gekennzeichnet, daß** das Verarbeitungsprogramm von dem zweiten EDV-System (22) an das erste EDV-System (2) übermittelt wird.

3. Verfahren nach Anspruch 2,
**dadurch gekennzeichnet, daß** bei der Abfrage des zweiten EDV-Systems (22) dem zweiten EDV-System (22) von dem ersten EDV-System (2) erste Daten übermittelt werden, durch die das zweite EDV-System (22) zur Übermittlung des Verarbeitungsprogramms veranlaßt wird.

4. Verfahren nach Anspruch 3,
**dadurch gekennzeichnet, daß** die ersten Daten mindestens ein für das zweite EDV-System (22) verständliches Befehlsprogramm sind.

5. Verfahren nach den Ansprüchen 3 oder 4,
**dadurch gekennzeichnet, daß** die ersten Daten ein interaktives Programm zum Suchen der Daten und des Verarbeitungsprogramms in dem zweiten EDV-System (22) sind.

6. Verfahren nach Anspruch 2,
**dadurch gekennzeichnet, daß** bei der Abfrage des zweiten EDV-Systems (22) dem ersten EDV-System (2) von dem zweiten EDV-System (22) selbständig das Verarbeitungsprogramm übermittelt wird.

7. Verfahren nach einem der vorstehenden Ansprüche,
**dadurch gekennzeichnet, daß** das oder die Verarbeitungsprogramme zur Verarbeitung der übermittelten Daten nur so lange von dem ersten EDV-System (2) gespeichert werden, wie dies zur Verarbeitung der übermittelten Daten nötig ist.

8. Verfahren nach einem der vorstehenden Ansprüche,
**dadurch gekennzeichnet, daß** das oder die Verarbeitungsprogramme zur Verarbeitung der übermittelten Daten nur so lange von dem ersten EDV-System (2) gespeichert werden, wie dies von dem Benutzer des ersten EDV-Systems (2) vorgegeben wird.

9. Verfahren nach einem der vorstehenden Ansprüche,
**dadurch gekennzeichnet, daß** es sich bei den übermittelten Daten um einen Stadtplan, einen Fahrplan für öffentliche Verkehrsmittel oder um Messeinformation handelt, und **daß** es sich bei dem Verarbeitungsprogramm um ein Programm zur Aufbereitung der übermittelten Daten und zur Bedienung und interaktiven Abfrage durch einen Benutzer handelt.

10. EDV-System zur Kommunikation mit mindestens einem zweiten EDV-System (22),
mit einer Recheneinheit (4) zur Verarbeitung von Daten,
mit einer Speichereinheit (6) zur Speicherung von Daten,
mit einer Anzeigeeinheit (8) zur Anzeige von Daten,
mit einer Eingabeeinheit (8) zur Eingabe von Daten,
mit einer Übermittlungseinheit (10) zum Austauschen von Daten mit dem zweiten EDV-System (22),
mit einer Schnittstelle (16) zum Anschließen der Recheneinheit (4) an die Übermittlungseinheit (10),
**dadurch gekennzeichnet, daß** in der Speichereinheit (6) erste Daten gespeichert sind, die bei einer Aktivierung der Übermittlungseinheit (10) zur Abfrage von zweiten Daten des zweiten EDV-Systems (22) dem zweiten EDV-System (22) zusätzlich übermittelt werden, so daß das zweite EDV-System (22) bei der Übermittlung der zweiten Daten an das erste EDV-System (2) mindestens ein Verarbeitungsprogramm zur Verarbeitung der zweiten Daten mit übermittelt.

11. EDV-System nach Anspruch 10,
**dadurch gekennzeichnet, daß** die ersten Daten mindestens ein Befehlsprogramm sind, welches dem zweiten EDV-System (22) befiehlt, bei der Übermittlung der zweiten Daten das Verarbeitungsprogramm für die zweiten Daten mit zu übermitteln.

12. EDV-System nach den Ansprüchen 10 oder 11,
**dadurch gekennzeichnet, daß** die Aktivierung der Übermittlungseinheit durch den Benutzer des EDV-Systems (2) mit Hilfe der Eingabeeinheit (8), der Recheneinheit (4), der Speichereinheit (6) und der Schnittstelle (16) geschieht.

13. EDV-System nach einem der Ansprüche 10 bis 12,
**dadurch gekennzeichnet, daß** die Übermittlungseinheit (10) von dem EDV-System (2) abnehmbar ist.

14. EDV-System nach einem der Ansprüche 10 bis 13, **dadurch gekennzeichnet, daß** die Übermittlungseinheit (10) ein Mobiltelefon ist.

15. EDV-System nach dem vorstehenden Anspruch,
**dadurch gekennzeichnet, daß** das Mobiltelefon als Steckmodul (10) an das EDV-System anschließbar ist.

16. EDV-System nach dem vorstehenden Anspruch,
**dadurch gekennzeichnet, daß** das Steckmodul (10) durch das EDV-System (2) kontrollierbar ist.

17. EDV-System nach einem der vorstehenden Ansprüche,
**dadurch gekennzeichnet, daß** das EDV-System (2) ein transportabler Personal-Computer ist.

18. EDV-System nach einem der Ansprüche 10 bis 17,
**dadurch gekennzeichnet, daß** die Eingabeeinheit ein berühungsempfindlicher Bildschirm (8) ist.

19. EDV-System nach einem der Ansprüche 10 bis 18,
**dadurch gekennzeichnet, daß** die zweiten Daten ein Stadtplan, ein Fahrplan für öffentliche Verkehrsmittel, eine Messeinformation oder eine Touristeninformation sind.

20. EDV-System nach einem der Ansprüche 10 bis 17,
**dadurch gekennzeichnet, daß** es sich bei dem Verarbeitungsprogramm um ein E-Mail-Programm handelt.

21. EDV-System nach einem der Ansprüche 10 bis 20,
**dadurch gekennzeichnet, daß** das EDV-System (2) mit dem zweiten EDV-System (22) mit Hilfe des DECT-, des GSM- (18) oder des Ethernet-Systems kommuniziert.

## Claims

1. A method for communicating between a first data processing system (2) and at least a second data processing system (22) **characterised in that** on interrogation of the second data processing system (22) data by the first data processing system (2), at least a processing program is communicated with it for processing the communicated data.

2. A method according to claim 1, **characterised in that** the processing program is communicated from the second data processing system (22) to the first data processing system (2).

3. A method according to claim 2, **characterised in that** on interrogation of the second data processing system, first data from the first data processing system (2) is communicated to the second data processing system (22), through which the second data processing system (22) is induced to communicate the processing program.

4. A method according to claim 3, **characterised in that** the first data is at least an instruction program intelligible to the second data processing system (22).

5. A method according to claims 3 or 4, **characterised in that** the first data is an interactive program for searching the data and the processing program in the second data processing system (22).

6. A method according to claim 2, **characterised in that** on interrogation of the second data processing system (22), the processing program is communicated independently from the second data processing system (22) to the first data processing system (2).

7. A method according to any of the above claims, characterised in that the processing program or programs for processing the communicated data is only stored by the first data processing system (2) for as long as is necessary for this to process the communicated data.

8. A method according to any of the above claims, characterised in that the processing program or programs for processing the communicated data is only stored by the first data processing system (2) for as long as this is preset by the user of the first data processing system (2).

9. A method according to any of the above claims, characterised in that the communicated data relates to a street map, a timetable for public transport or trade fair information, and that the processing program relates to a program for preparing the communicated data and for operation and interactive interrogation by the user.

10. A data processing system for communicating with at least a second data processing system (22),
having a computing unit (4) for processing data,
having a storage unit (6) for storing data,
having a display unit (8) for displaying data,
having an input unit (8) for the input of data,
having a communication unit (10) for exchanging data with the second data processing system (22), having an interface (16) for attaching computing unit (4) to communication unit (10), **characterised in that** first data is stored in storage unit (6), which is additionally communicated to the second data processing system (22) on activation of communication unit (10) for interrogating the second data of second data processing system (22), so that the second data processing system (22) communicates with it at least a processing program for processing the second data on communication of the second data to the first data processing system (2).

11. A data processing system according to claim 10, characterised in that the first data is at least an instruction program which instructs the processing program for the second data to be communicated to the second data processing system (22) on communication of the second data.

12. A data processing system according to claims 10 or 11, **characterised in that** activation of the communication unit takes place via the user of data processing system (2) with the aid of input unit (8), computing unit (4), storage unit (6) and interface (16).

13. A data processing system according to any of claims 10-12, **characterised in that** communication unit (10) can be removed from data processing system (2).

14. A data processing system according to any of claims 10-13, **characterised in that** communication unit (10) is a mobile telephone.

15. A data processing system according to the above claim, **characterised in that** the mobile telephone can be attached to the data processing system as a plug-in module (10).

16. A data processing system according to the above claim, **characterised in that** the plug-in module (10) can be controlled through data processing system (2).

17. A data processing system according to any of the above claims, **characterised in that** the data processing system is a transportable personal computer.

18. A data processing system according to any of claims 10-17, **characterised in that** the input unit is a touch-sensitive panel display (8).

19. A data processing system according to any of claims 10-18, **characterised in that** the second data is a street plan, a timetable for public transport, trade fair information or tourist information.

20. A data processing system according to any of claims 10-17, **characterised in that** the processing program relates to an E-mail program.

21. A data processing system according to any of claims 10-20, **characterised in that** data processing system (2) communicates with the second data processing system (22) with the aid of DECT, GSM (18) or ethernet system.

## Revendications

1. Procédé pour la communication entre un premier système de traitement de données électronique (en allemand, "EDV-System"(2)) et au moins un deuxième système de traitement de données électronique(22), **caractérisé en ce que**, lorsque le premier système de traitement de données électronique(2) émet une requête de données vers le deuxième système de traitement de données électronique(22), au moins un programme de traitement est transmis en même temps au premier système de données électronique(2) pour le traitement des données transmises.

2. Procédé selon la revendication 1, **caractérisé en ce que** le programme de traitement est transmis par le deuxième système de traitement de données électronique(22) au premier système de traitement de données électronique(2).

3. Procédé selon la revendication 2, **caractérisé en ce que** lors de l'interrogation du deuxième système de traitement de données électronique(22) des premières données sont transmises au deuxième système de traitement de données électronique(22) par le premier système de traitement de données électronique (2), données qui donnent lieu à la transmission du programme de traitement par le deuxième système de traitement de données électronique(22).

4. Procédé selon la revendication 3, **caractérisé en ce que** les premières données sont au moins un programme d'instructions intelligible pour le deuxième système de traitement de données électronique(22).

5. Procédé selon les revendications 3 ou 4, **caractérisé en ce que** les premières données sont un programme interactif pour la recherche de données et du programme de traitement dans le deuxième système de traitement de données électronique(22).

6. Procédé selon la revendication 2, **caractérisé en ce que** le programme de traitement est transmis de façon autonome, par le deuxième système de traitement de données électronique(22) au premier système de traitement de données électronique(2) lors de l'interrogation du deuxième système de traitement de données électronique(22), le programme de traitement au premier système de traitement de données électronique(2) par le deuxième système de traitement de données électronique(22).

7. Procédé selon l'une quelconque des revendications précédentes, **caractérisé en ce que** le ou les programmes de traitement pour le traitement des données transmises ne sont enregistrés par le premier système de traitement de données électronique(2) que pendant une durée nécessaire au traitement des données transmises.

8. Procédé selon l'une quelconque des revendications précédentes, **caractérisé en ce que** le ou les programmes de traitement pour le traitement des données transmises ne sont enregistrés par le premier système de données électronique(2) que pendant une durée prescrite par l'utilisateur du premier système de traitement de données électronique(2).

9. Procédé selon l'une quelconque des revendications précédentes, **caractérisé en ce qu'**il s'agit concernant les données transmises d'un plan de ville, d'un horaire de moyens de transport publics ou d'informations concernant un salon et **en ce qu'**il s'agit concernant le programme de traitement d'un programme pour la préparation des données transmises et pour l'utilisation et l'interrogation interactive par un utilisateur.

10. Système de traitement de données électronique(en allemand "EDV-System") pour la communication avec au moins un deuxième système de traitement de données électronique(22),
ledit système comprenant une unité de calcul (4) pour le traitement de données,
une unité de mémoire (6) pour l'enregistrement de données,
une unité d'affichage (8) pour l'affichage de données,
une unité de saisie (8) pour la saisie de données,
une unité de transmission (10) pour l'échange de données avec le deuxième astre système de traitement de données électronique(22),
une interface (16) pour la connexion de l'unité de calcul (4) à l'unité de transmission (10),
**caractérisé en ce que**, dans l'unité de calcul (6) sont enregistrées des premières données qui sont transmises en plus au deuxième système de traitement de données électronique(22) lors de l'activation de l'unité de transmission (10) pour l'interrogation de secondes données du deuxième système de traitement de données électronique(22) au deuxième système de traitement de données électronique(22), de telle sorte que le deuxième système de traitement de données électronique(22) transmet en même temps, lors de la transmission des secondes données au premier systèmes de traitement de données électronique(2), au moins un programme de traitement pour le traitement des secondes données.

11. Système de traitement de données électronique selon la revendication 10, **caractérisé en ce que** les premières données sont au moins un programme d'instructions, qui ordonne au deuxième système de traitement de données électronique(22) de transmettre en même temps lors de la transmission des secondes données le programme de traitement pour les secondes données.

12. Système de traitement de données électronique selon la revendication 10 ou 11, **caractérisé en ce que** l'activation de l'unité de transmission par l'utilisateur du système de traitement de données électronique (2) s'effectue à l'aide de l'unité de saisie (8), de l'unité de calcul (4), de l'unité de mémoire (6) et de l'interface (16).

13. Système de traitement de données électronique selon l'une quelconque des revendications 10 à 12, **caractérisé en ce que** l'unité de transmission (10) peut être démontée du système de traitement de données électronique (2).

14. Système de traitement de données électronique selon l'une quelconque des revendications 10 à 13, **caractérisé en ce que** l'unité de transmission (10) est un téléphone mobile.

15. Système de traitement de données électronique selon la revendication précédente, **caractérisé en ce que** le téléphone mobile peut être connecté comme module enfichable (10) au système de traitement de données électronique.

16. Système de traitement de données électronique selon la revendication précédente, **caractérisé en ce que** le module enfichable (10) peut être contrôlé par le système de traitement de données électronique (2).

17. Système de traitement de données électronique selon l'une quelconque des revendications précédentes, **caractérisé en ce que** le système de traitement de données électronique (2) est un ordinateur personnel portable.

18. Système de traitement de données électronique selon l'une des revendications 10 à 17, **caractérisé en ce que** l'unité de saisie est un écran tactile (8).

19. Système de traitement de données électronique selon l'une des revendications 10 à 18, **caractérisé en ce que** les secondes données sont un plan de ville, un horaire de moyens de transport publics, des informations concernant un salon ou des informations touristiques.

20. Système de traitement de données électronique selon l'une des revendications 10 à 17, **caractérisé en ce qu'**il s'agit concernant le programme de traitement d'un programme e-mail.

21. Système de traitement de données électronique selon l'une des revendications 10 à 20, **caractérisé en ce que** le système de traitement de données électronique (2) communique avec le deuxième système de traitement de données électronique (22) à l'aide du système DECT, GSM ou Ethernet.
